# EUROPEAN PATENT APPLICATION

(11) **EP 4 654 554 A1**
(43) Date of publication of application: **26.11.2025**
(21) Application number: 25177572.2
(22) Date of filing: 20.05.2025
(51) Int. Cl.: H04L 65/10

(54) **CLOUD-BASED VOICE INTERCONNECTS FOR CONTACT CENTERS AND CORPORATE TELEPHONY**

(30) Priority: 21.05.2024 US 202418669924
(71) Applicant: Google LLC, Mountain View, CA 94043 (US)
(72) Inventor: KURASALA, SURYA SRINIVAS, Montain View, CA, 94043 (US); FERNANDES, SAVIO NILESH, Mountain View, CA, 94043 (US)
(74) Representative: Betten & Resch

(57) **Abstract**

An example cloud-based voice interconnect system includes data processing hardware of a cloud-based computing platform, a network, and a public telecom carrier system. The data processing hardware is in communication with memory hardware storing instructions that, when executed on the data processing hardware, cause the data processing hardware to perform operations including providing a private virtualized computing environment, and implementing a private cloud-based session border controller (SBC) in the virtualized computing environment. The public telecom carrier system is connected to the private cloud-based SBC via the network, and is configured to provide telecom services between the private cloud-based SBC and customers of the public telecom carrier system.

## Description

### TECHNICAL FIELD

This disclosure relates to cloud-based voice interconnects for contact centers and corporate telephony.

### BACKGROUND

A session border controller (SBC) governs the manner in which phone calls (i.e., sessions) are initiated, conducted, and terminated on a voice over Internet Protocol (VoIP) network. An SBC acts as a router between a network and a carrier service, enabling only authorized sessions to pass through the connection point or border.

### SUMMARY

One aspect of the disclosure provides a cloud-based voice interconnect system including data processing hardware of a cloud-based computing platform, a network, and a public telecom carrier system. The data processing hardware is in communication with memory hardware storing instructions that, when executed on the data processing hardware, cause the data processing hardware to perform operations including providing a private virtualized computing environment, and implementing a private cloud-based session border controller (SBC) in the virtualized computing environment. The public telecom carrier system is connected to the private cloud-based SBC via the network, and is configured to provide telecom services between the private cloud-based SBC and customers of the public telecom carrier system.

Implementations of the disclosure may include one or more of the following optional features. In some implementations, the network includes a direct telecom carrier circuit. Additionally or alternatively, the network includes the Internet. The private cloud-based SBC and the public telecom carrier system may communicate via the Internet using a private Internet protocol (IP) address. Additionally or alternatively, the private cloud-based SBC and the public telecom carrier system may communicate via the Internet using a public IP address.

In some examples, the private cloud-based SBC and the public telecom carrier system communicate using a session initiation protocol. In some implementations, the network includes a session initiation protocol (SIP) trunk. In some examples, the operations also include interacting with an IP multimedia subsystem (IMS) platform implemented on a second, different cloud-based computing platform.

In some implementations, the operations also include implementing a cloud-based private branch exchange (PBX) in the virtualized computing environment. In some examples, the operations also include implementing a cloud-based contact center in the virtualized computing environment, the cloud-based contact center in communication with a contact center artificial intelligence (AI) server implemented on a second, different cloud-based computing platform.

Another aspect of the disclosure provides a computer-implemented method executed on data processing hardware of a cloud-based computing platform that causes the data processing hardware to perform operations. The operations include providing a private virtualized computing environment, and implementing a private cloud-based session border controller (SBC) in the virtualized computing environment. The private cloud-based SBC is connected to a public telecom carrier system via a network, and is configured to provide telecom services between the private cloud-based SBC and customers of the public telecom carrier system.

Implementations of the disclosure may include one or more of the following optional features. In some implementations, the network includes a direct telecom carrier circuit. Additionally or alternatively, the network includes the Internet. The private cloud-based SBC and the public telecom carrier system may communicate via the Internet using a private Internet protocol (IP) address. Additionally or alternatively, the private cloud-based SBC and the public telecom carrier system may communicate via the Internet using a public IP address.

In some examples, the private cloud-based SBC and the public telecom carrier system communicate using a session initiation protocol. In some implementations, the network includes a session initiation protocol (SIP) trunk. In some examples, the operations also include interacting with an IP multimedia subsystem (IMS) platform implemented on a second, different cloud-based computing platform.

In some implementations, the operations also include implementing a cloud-based private branch exchange (PBX) in the virtualized computing environment. In some examples, the operations also include implementing a cloud-based contact center in the virtualized computing environment, the cloud-based contact center in communication with a contact center artificial intelligence (AI) server implemented on a second, different cloud-based computing platform.

The details of one or more implementations of the disclosure are set forth in the accompanying drawings and the description below. Other aspects, features, and advantages will be apparent from the description and drawings, and from the claims.

### DESCRIPTION OF DRAWINGS

FIG. 1A is a schematic view of an example cloud-based voice interconnect system.
FIG. 1B is a schematic view of another example of a cloud-based voice interconnect system.
FIG. 1C is a schematic view of yet another example of a cloud-based voice interconnect system.
FIG. 2 is a flowchart of an example arrangement of operations for a computer-implemented method for providing cloud-based voice interconnects for contact centers and corporate telephony.
FIG. 3 is a schematic view of an example computing device that may be used to implement the systems and methods described herein.

Like reference symbols in the various drawings indicate like elements.

### DETAILED DESCRIPTION

A session border controller (SBC) is a dedicated hardware device or software application that governs the manner in which phone calls (i.e., sessions) are initiated, conducted, and terminated on a voice over Internet protocol (VoIP) network. An SBC acts as a router between a network and a carrier service, enabling only authorized sessions to pass through the connection point or border. A challenge facing businesses is how to integrate data-center-based on-premises SBCs and dedicated circuits with the ever evolving landscape of cloud-based private branch exchanges (PBXs) and conversational artificial intelligence (AI) platforms. Such integration necessitates bridging the gaps between traditional infrastructure and cloud-based solutions. Considering technical integration, cost-effectiveness, and organizational adaptation there is a need to maintain the value of existing investments while benefiting from the agility of cloud-based technologies. However, integrating on-premises SBCs with dedicated voice circuits into the ever-evolving landscape of cloud-based PBX and conversational AI platforms introduces a multitude of intricate challenges. One pressing issue stems from the fundamental design difference between traditional, dedicated, on-premises SBCs and dedicated voice circuits, and the inherently dynamic nature of cloud-based solutions. On-premises dedicated systems are architected for stability, security, and reliability in a controlled environment, while cloud based-platforms emphasize adaptability, flexibility, and scalability in a more distributed setting. Accordingly, there is a need for cloud-based voice interconnects for contact centers and corporate telephony.

Disclosed example implementations include connecting cloud-based voice interconnects to voice-service carriers through direct partner interconnects and/or Internet based interconnectivity (e.g., by leveraging existing connections from a service provider to a cloud provider so that there is not a need for a separate circuit for telecom needs) to minimize the reliance on on-premises connectivity and devices, but also to significantly reduce the time required for market deployment. This streamlined approach ensures a swift and efficient implementation of voice connectivity to voice-service carriers for contact centers and corporate telephony needs, allowing for quicker adaptation to changing business needs. Advantages of disclosed examples include the ability to set up and dismantle a voice interconnect system without incurring additional costs for network switches, firewalls, or related infrastructure. The flexibility to set up and tear down the disclosed voice interconnect systems efficiently and cost-effectively underscores the scalability and adaptability of this approach for dynamic business needs. The disclosed cloud-based SBCs offer flexible connectivity options, allowing enterprises to integrate with cloud-based Internet protocol (IP) multimedia subsystem (IMS) platforms, on the same or different cloud-based computing platforms. These service providers can also leverage the cloud-based SBCs as edge SBCs to provide voice services to enterprises or to integrate with their partners, thus eliminating the necessity for an on-premises SBC for service providers optimizing the overall communication infrastructure.

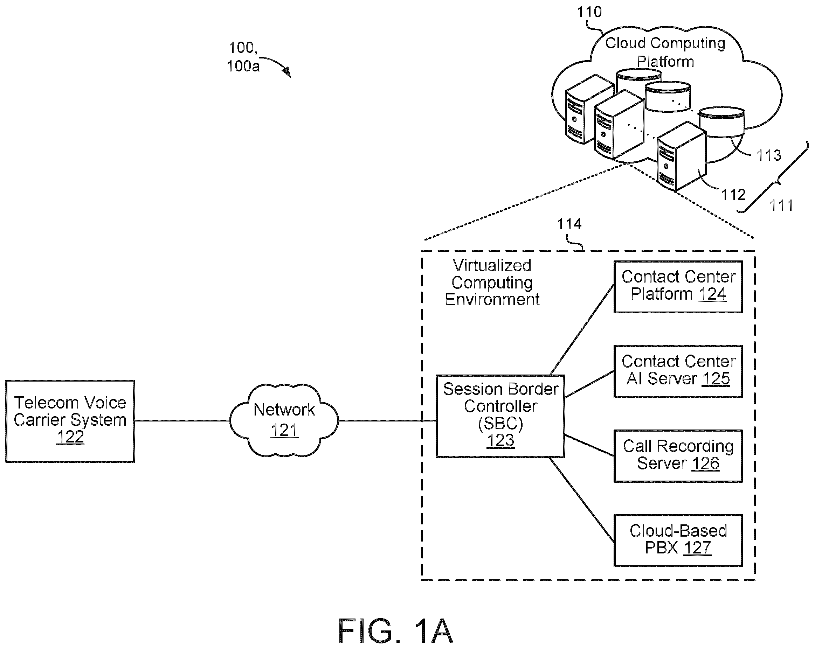

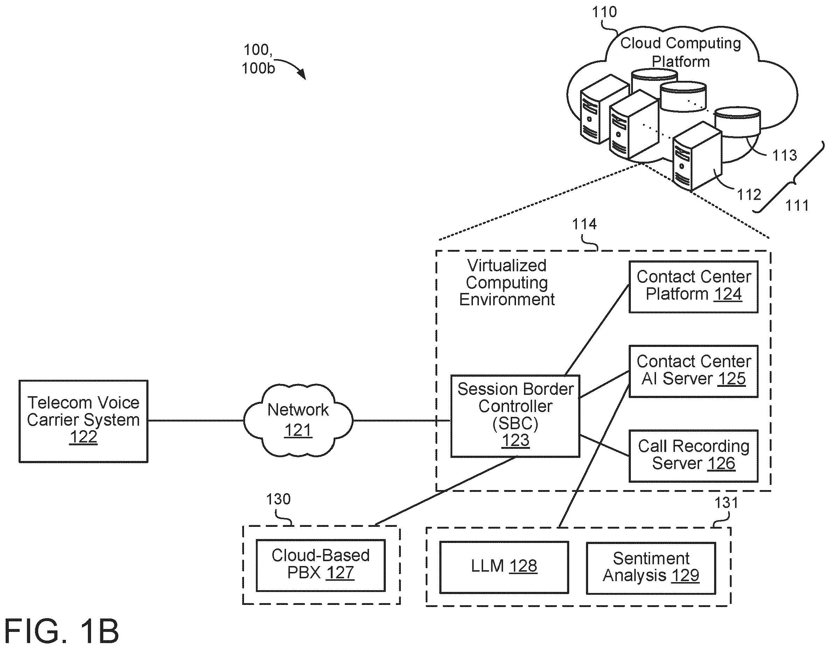

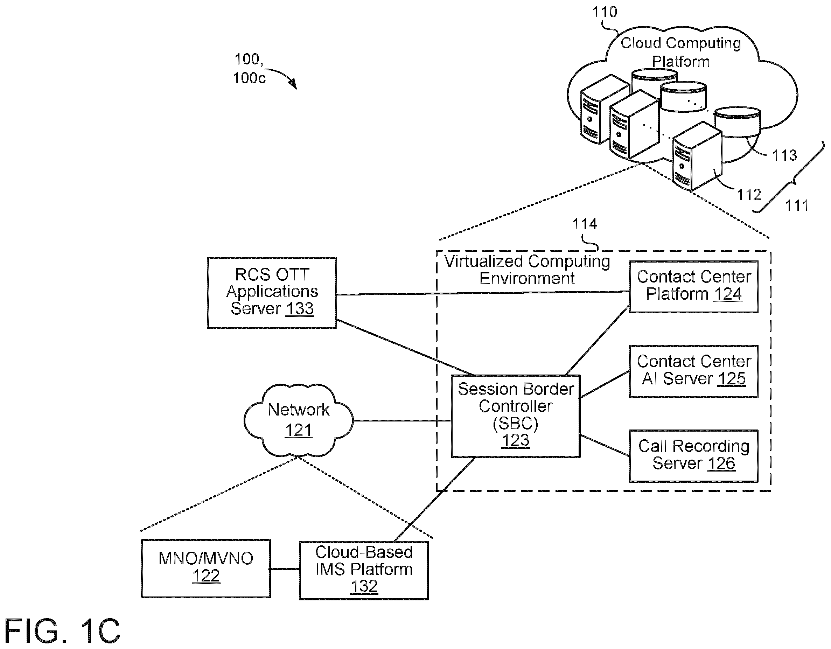

FIGS. 1A, 1B, and 1C are schematic views of example cloud-based voice interconnect systems 100, 100a-c for providing cloud-based voice interconnects for contact centers and corporate telephony. Each of the cloud-based voice interconnect systems 100 includes a cloud-based computing platform 110, a network 121, and a public telecom carrier system 122. The cloud-based computing platform 110 includes resources 111, such as data processing hardware 112 (e.g., servers or CPUs) and/or memory hardware 113 (e.g., memory, databases, or other storage hardware). The data processing hardware 112 is in communication with the memory hardware 113. The memory hardware 113 stores instructions that, when executed on the data processing hardware 112, cause the data processing hardware 112 to perform operations including providing a private virtualized computing environment 114, and implementing a private cloud-based session border controller (SBC) 123 in the private virtualized computing environment 114. The public telecom carrier system 122 is connected to the private cloud-based SBC 123 via the network 121, and is configured to provide telecom services between the private cloud-based SBC 123 and customers of the public telecom carrier system 122.

Implementations of the disclosure may include one or more of the following optional features. In some implementations, the network 121 includes a direct telecom carrier circuit. Optionally, this includes a primary rate interface (e.g., an integrated services digital network (ISDN) line, a T1 trunk line, or an E1 trunk line). Additionally or alternatively, the network 121 includes the Internet. The private cloud-based SBC 123 and the public telecom carrier system 122 may communicate via the Internet using a private Internet protocol (IP) address. Additionally or alternatively, the private cloud-based SBC and the public telecom carrier system may communicate via the Internet using a public IP address. In some examples, the private cloud-based SBC 123 and the public telecom carrier system 122 communicate using a session initiation protocol. In some implementations, the network 121 includes a session initiation protocol (SIP) trunk.

The private cloud-based SBC 123 may provide interfaces to one or more of a contact center platform 124 in communication with a contact center AI server 125, a call recording server 126, and/or a private cloud-based PBX platform 127. In the example of FIG. 1A, the operations also include implementing the contact center platform 124, the contact center AI server 125, the call recording server 126, and the cloud-based PBX platform 127 on the private virtualized computing environment 114. In the example of FIG. 1B, the cloud-based PBX platform 127 is implemented on a virtualized computing environment 130 different from the private virtualized computing environment 114, or on a cloud-based computing platform different from the cloud-based computing platform 110. Additionally or alternatively, the contact center AI server 125 may interact with a large language model (LLM) 128 or a sentiment analysis server 129 implemented on a virtualized computing environment 131 different from the private virtualized computing environment 114, or on a cloud-based computing platform different from the cloud-based computing platform 110. In the example of FIG. 1C, the public telecom carrier system 122 includes a mobile network operator (MNO) and/or a mobile virtual network operator (MVNO) interfacing with the private cloud-based SBC 123 via the Internet and a cloud-based IP multimedia subsystem (IMS) platform 132 implemented on a virtualized computing environment different from the private virtualized computing environment 114, or on a cloud-based computing platform different from the cloud-based computing platform 110. Here, the system 100c may also include a rich communication services (RCS) over-the-top (OTT) media service applications server 133.

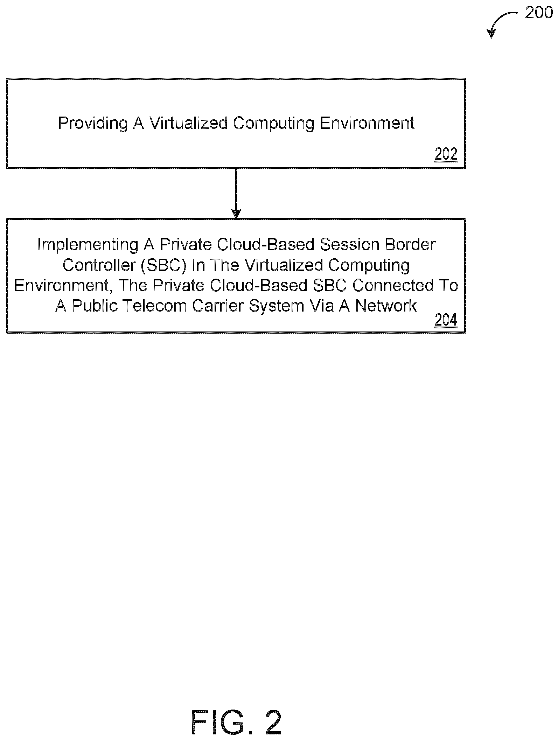

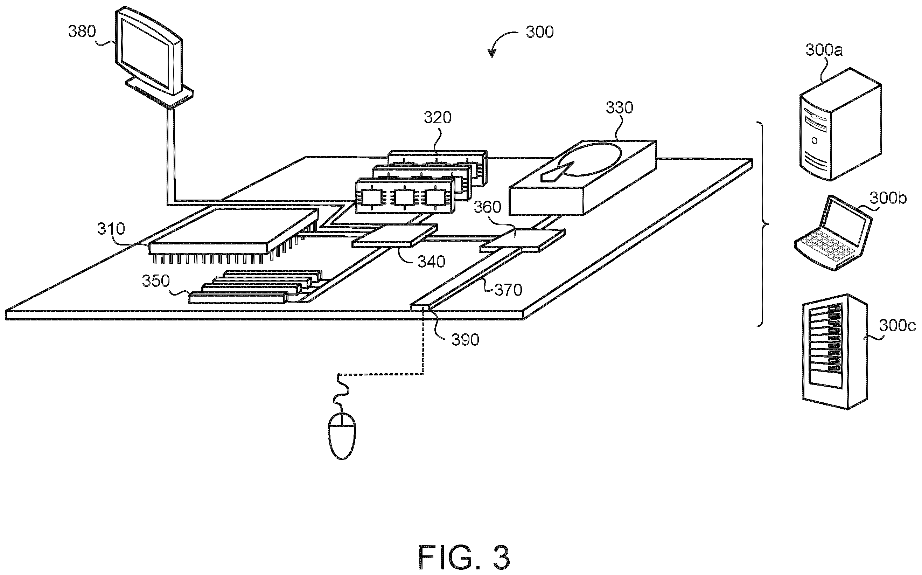

FIG. 2 is a flowchart of an exemplary arrangement of operations for a computer-implemented method 200 for providing cloud-based voice interconnects for contact centers and corporate telephony. The operations may be performed by data processing hardware 310 (e.g., the data processing hardware 112 of the cloud-based computing platform 110) based on executing instructions stored on memory hardware 320 (FIG. 3) (e.g., the memory hardware 113 of the cloud-based computing platform 110).

At operation 202, the method 200 includes providing a private virtualized computing environment 114. At operation 204, the method 200 includes implementing a private cloud-based SBC 123 in the private virtualized computing environment 114. Here, the private cloud-based SBC123 is connected to a public telecom carrier system 122 via a network 121, and is configured to provide telecom services between the private cloud-based SBC 123 and customers of the public telecom carrier system 122.

FIG. 3 is a schematic view of an example computing device 300 (e.g., a laptop or the like) that may be used to implement the systems and methods described in this document. The computing device 300 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document. The computing device 300 may connect with one or more other computing devices. For example, a user may execute a web browser application on a laptop to communicate with a web-based cloud graphical user interface (GUI).

The computing device 300 includes a processor 310 (i.e., data processing hardware) that can be used to implement the data processing hardware 112, memory 320 (i.e., memory hardware) that can be used to implement the memory hardware 113, a storage device 330 (i.e., memory hardware) that can be used to implement the memory hardware 113, a high-speed interface/controller 340 connecting to the memory 320 and high-speed expansion ports 350, and a low speed interface/controller 360 connecting to a low speed bus 370 and a storage device 330. Each of the components 310, 320, 330, 340, 350, and 360, are interconnected using various busses, and may be mounted on a common motherboard or in other manners as appropriate. The processor 310 can process instructions for execution within the computing device 300, including instructions stored in the memory 320 or on the storage device 330 to display graphical information for a graphical user interface (GUI) on an external input/output device, such as display 380 coupled to high speed interface 340. In other implementations, multiple processors and/or multiple buses may be used, as appropriate, along with multiple memories and types of memory. Also, multiple computing devices 300 may be connected, with each device providing portions of the necessary operations (e.g., as a server bank, a group of blade servers, or a multi-processor system).

The memory 320 stores information non-transitorily within the computing device 300. The memory 320 may be a computer-readable medium, a volatile memory unit(s), or non-volatile memory unit(s). The non-transitory memory 320 may be physical devices used to store programs (e.g., sequences of instructions) or data (e.g., program state information) on a temporary or permanent basis for use by the computing device 300. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 330 is capable of providing mass storage for the computing device 300. In some implementations, the storage device 330 is a computer-readable medium. In various different implementations, the storage device 330 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 320, the storage device 330, or memory on processor 310.

The high speed controller 340 manages bandwidth-intensive operations for the computing device 300, while the low speed controller 360 manages lower bandwidth-intensive operations. Such allocation of duties is exemplary only. In some implementations, the high-speed controller 340 is coupled to the memory 320, the display 380 (e.g., through a graphics processor or accelerator), and to the high-speed expansion ports 350, which may accept various expansion cards (not shown). In some implementations, the low-speed controller 360 is coupled to the storage device 330 and a low-speed expansion port 390. The low-speed expansion port 390, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 300 may be implemented in a number of different forms, as shown in the figure. For example, it may be implemented as a standard server 300a or multiple times in a group of such servers 300a, as a laptop computer 300b, or as part of a rack server system 300c.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

A software application (i.e., a software resource) may refer to computer software that causes a computing device to perform a task. In some examples, a software application may be referred to as an "application," an "app," or a "program." Example applications include, but are not limited to, system diagnostic applications, system management applications, system maintenance applications, word processing applications, spreadsheet applications, messaging applications, media streaming applications, social networking applications, and gaming applications.

These computer programs (also known as programs, software, software applications, or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The processes and logic flows described in this specification can be performed by one or more programmable processors, also referred to as data processing hardware, executing one or more computer programs to perform functions by operating on input data and generating output. The processes and logic flows can also be performed by special purpose logic circuitry, e.g., an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Unless expressly stated to the contrary, "or" refers to an inclusive or and not to an exclusive or. For example, "A, B, or C" refers to any combination or subset of A, B, C such as: (1) A alone; (2) B alone; (3) C alone; (4) A with B; (5) A with C; (6) B with C; and (7) A with B and with C. Similarly, the phrase "at least one of A or B" is intended to refer to any combination or subset of A and B such as: (1) at least one A; (2) at least one B; and (3) at least one A and at least one B. Moreover, the phrase "at least one of A and B" is intended to refer to any combination or subset of A and B such as: (1) at least one A; (2) at least one B; and (3) at least one A and at least one B.

A number of implementations have been described. Nevertheless, it will be understood that various modifications may be made without departing from the scope of the disclosure. Accordingly, other implementations are within the scope of the following claims.

## Claims

1. A cloud-based voice interconnect system comprising:
data processing hardware of a cloud-based computing platform;
memory hardware in communication with the data processing hardware, the memory hardware storing instructions that, when executed on the data processing hardware, cause the data processing hardware to perform operations comprising:
providing a private virtualized computing environment; and
implementing a private cloud-based session border controller, SBC, in the virtualized computing environment;
a network; and
a public telecom carrier system, the public telecom carrier system connected to the private cloud-based SBC via the network, and configured to provide telecom services between the private cloud-based SBC and customers of the public telecom carrier system.

2. The cloud-based voice interconnect system of claim 1, wherein the network comprises a direct telecom carrier circuit.

3. The cloud-based voice interconnect system of claim 1, wherein the network comprises the Internet.

4. The cloud-based voice interconnect system of claim 3,
wherein the private cloud-based SBC and the public telecom carrier system communicate via the Internet using a private Internet protocol, IP, address; or
wherein the private cloud-based SBC and the public telecom carrier system communicate via the Internet using a public Internet protocol, IP, address.

5. The cloud-based voice interconnect system of one of claim 1, wherein the private cloud-based SBC and the public telecom carrier system communicate using a session initiation protocol; and/or
wherein the network comprises a session initiation protocol, SIP, trunk.

6. The cloud-based voice interconnect system of claim 1, wherein the operations further comprise interacting with an Internet protocol, IP, multimedia subsystem, IMS, platform implemented on a second, different cloud-based computing platform.

7. The cloud-based voice interconnect system of claim 1, wherein the operations further comprise implementing a cloud-based private branch exchange, PBX, in the virtualized computing environment.

8. The cloud-based voice interconnect system of claim 1, wherein the operations further comprise implementing a cloud-based contact center in the virtualized computing environment, the cloud-based contact center in communication with a contact center artificial intelligence, AI, server implemented on a second, different cloud-based computing platform.

9. A computer-implemented method executed on data processing hardware of a cloud-based computing platform that causes the data processing hardware to perform operations comprising:
providing a private virtualized computing environment; and
implementing a private cloud-based session border controller, SBC, in the virtualized computing environment, the private cloud-based SBC connected to a public telecom carrier system via a network, and configured to provide telecom services between the private cloud-based SBC and customers of the public telecom carrier system.

10. The computer-implemented method of claim 9, wherein the network comprises a direct telecom carrier circuit.

11. The computer-implemented method of claim 9, wherein the network comprises the Internet.

12. The computer-implemented method of claim 11,
wherein the private cloud-based SBC and the public telecom carrier system communicate via the Internet using a private Internet protocol, IP, address; or
wherein the private cloud-based SBC and the public telecom carrier system communicate via the Internet using a public Internet protocol, IP, address.

13. The computer-implemented method of one of claims 9 to 12,
wherein the private cloud-based SBC and the public telecom carrier system communicate using a session initiation protocol; and/or
wherein the network comprises a session initiation protocol, SIP, trunk.

14. The computer-implemented method of one of claims 9 to 13, wherein the operations further comprise interacting with an Internet protocol, IP, multimedia subsystem, IMS, platform implemented on a second, different cloud-based computing platform.

15. The computer-implemented method of one of claims 9 to 14,
wherein the operations further comprise implementing a cloud-based private branch exchange, PBX, in the virtualized computing environment; and/or
wherein the operations further comprise implementing a cloud-based contact center in the virtualized computing environment, the cloud-based contact center in communication with a contact center artificial intelligence, AI, server implemented on a second, different cloud-based computing platform.
